# EUROPÄISCHE PATENTSCHRIFT

(11) **EP 2 643 390 B1**
(45) Veröffentlichungstag und Bekanntmachung des Hinweises auf die Patenterteilung: **15.10.2014**
(21) Anmeldenummer: 11781827.8
(22) Anmeldetag: 15.11.2011
(51) Int. Cl.: C08J 3/205

(54) **POLYAMIDE MIT NANOPARTIKELN AUF DER OBERFLAECHE**
POLYAMIDE HAVING NANOPARTICLES ON THE SURFACE
POLYAMIDES AYANT DES NANOPARTICULES SUR LA SURFACE

(30) Priorität: 23.11.2010 EP 10192240
(43) Veröffentlichungstag der Anmeldung: 02.10.2013
(73) Patentinhaber: BASF SE, 67056 Ludwigshafen (DE)
(72) Erfinder: JAIN, Sachin, Jalgaon 425001 (IN); KEELAPANDAL RAMAMOORTHY, Shankara Narayanan, 67117 Limburgerhof (DE)
(86) Internationale Anmeldenummer: PCT/EP2011/070184
(87) Internationale Veröffentlichungsnummer: WO 2012/069340

(56) Entgegenhaltungen:
- EP-A1- 0 007 624
- EP-A1- 0 590 647
- WO-A1-2007/059767
- WO-A1-2009/092698
- NL-A- 7 007 122

## Beschreibung

Die vorliegende Patentanmeldung beansprucht die Priorität der anhängigen vorläufigen US-Patentanmeldung 61/416,319 mit dem Anmeldetag 23. November 2010, die durch Bezugnahme in ihrer Gesamtheit in die vorliegende Patentanmeldung einbezogen wird.

Die Erfindung betrifft ein Verfahren zur Herstellung von Polymermischungen enthaltend mindestens ein Polymer und mindestens eine weitere Komponente, bei dem eine Lösung bzw. flüssige Dispersion der weiteren Komponente mittels eines Zerstäubers auf das in Partikelform vorliegende Polymer aufgebracht wird, die Polymerpartikel anschließend getrocknet werden und üblicherweise in Formgebungsprozessen weiter verarbeitet werden.

Polymere werden üblicherweise nicht als reine Stoffe verwendet, sondern meistens mit weiteren Komponenten gemischt eingesetzt. Bei thermoplastisch verarbeitbaren Polymeren stellt sich beispielsweise häufig das Problem, dass auf der einen Seite wegen der besseren mechanischen Eigenschaften Polymere mit hohem Molekulargewicht erwünscht sind, sich Polymere mit niedrigem Molekulargewicht jedoch besser verarbeiten lassen, dies jedoch auf Kosten der mechanischen Eigenschaften der hergestellten Produkte.

Ein Ansatz zur Lösung dieses Problems ist die Verwendung von Nanopartikeln zur Verbesserung der rheologischen und mechanischen Eigenschaften, wie zum Beispiel in WO 2004/74360 A und WO 2008/084021 A beschrieben.

Die Einarbeitung von Nanopartikeln in ein Polymer mit homogener Verteilung der Nanopartikel in der Polymermatrix ist jedoch schwierig, da das Mischen der Nanopartikel mit dem Polymer in der Schmelze beispielsweise in Extrudern oder Schmelzmischern häufig dazu führt, dass sich die Nanopartikel beim Mischen zu größeren Agglomeraten zusammenlagern und der positive Effekt der Nanopartikel dadurch verringert wird.

Eine andere Möglichkeit zur Verbesserung der Verarbeitbarkeit ist der Zusatz von hyperverzweigten Polymeren zum thermoplastischen Polymer. Damit werden die Fließfähigkeit und insbesondere die Langzeit-Eigenschaften verbessert, siehe beispielsweise WO 2010/054933, WO 2009/115535 und WO 2009/115536.

Bei organischen Verbindungen stellt der thermische Abbau dieser Verbindungen während des Mischens ein Problem dar. wobei unter Umständen sogar flüchtiae Gase frei werden können. Der thermische Abbau verringert die Menge an aktiver Verbindung im Polymer, zudem können die Abbauprodukte schädlich für das Polymer, den gewünschten Einsatzzweck und/oder die eingesetzten Verarbeitungsanlagen sein, beispielsweise wenn die Abbauprodukte korrosiv sind.

Aufgabe der vorliegenden Erfindung war, ein Verfahren bereitzustellen, mit dem Mischungen von Polymeren mit mindestens einer weiteren Komponente hergestellt werden können, bei dem die Belastung durch höhere, unerwünschte Abbaureaktionen fördernde Temperaturen vermindert wird, ohne zu einer schlechteren, beispielsweise einer inhomogeneren Verteilung der Mischungsbestandteile zu führen. Insbesondere soll das Verfahren ermöglichen, Mischungen von Polymeren mit Nanopartikeln herzustellen, in denen die Nanopartikel möglichst fein verteilt vorliegen und die Bildung von Agglomeraten aus Nanopartikeln möglichst gering ist.

Diese Aufgabe wird erfindungsgemäß gelöst durch das folgende Verfahren zur Herstellung von Polymermischungen enthaltend mindestens ein Polymer (A) und mindestens eine Komponente (B) umfassend die Schritte
(a) Bereitstellen von (A) als Granulat,
(b) Bereitstellen von (B) als flüssige Lösung und/oder Dispersion in einem Dispersionsmedium,
(c) Aufbringen der in Schritt (b) bereitgestellten Lösung und/oder Dispersion als Tröpfchen auf das in Schritt (a) bereitgestellte Granulat mittels eines Zerstäubers,
(d) Trocknen des in Schritt (c) erhaltenen Granulats und
(e) ggf. Durchführen eines oder mehrerer Formgebungsschritte.

Durch das Aufbringen der mindestens einen weiteren Komponente (B) in Form von kleinen Tröpfchen auf dem Polymergranulat und dem anschließenden Entfernen des Dispersionsmediums wird eine gleichmäßige und sehr feine Verteilung der Komponente (B) auf dem Polymergranulat erreicht, ohne dass das Polymer und die Komponente (B) einer starken Temperaturbelastung ausgesetzt werden müssen. Bei Verwendung von Polymeren als Komponente (B) macht sich dies beispielsweise positiv bei der Verringerung der beim Schmelzmischen üblicherweise auftretenden Molekulargewichtserniedrigung der Polymeren bemerkbar. Wenn Nanopartikel nach dem erfindungsgemäßen Verfahren mit einem Polymer gemischt werden, wird die Agglomeration der Nanopartikel deutlich reduziert, wie ein Vergleich von Polymer-Nanopartikel-Mischungen zeigt, die durch Schmelzmischen bzw. erfindungsgemäß hergestellt und jeweils anschließend extrudiert wurden.

Wenn das als (A) eingesetzte mindestens eine Polymer ausgewählt wird aus Polymeren, die durch die so genannte Solid-State-Polvkondensation hergestellt werden. lässt sich das erfindungsgemäße Verfahren besonders einfach in den Herstellungsprozess integrieren, insbesondere in den Postkondensationsschritt, bei dem das vorkondensierte Polymer für einige Zeit bei Temperaturen unterhalb der Glasübergangs- und Schmelztemperatur des Polymers gehalten werden, um das Molekulargewicht des Polymers durch weitere Kondensationsreaktionen zu erhöhen.

Im Folgenden wird die Erfindung ausführlich beschrieben.

In Schritt (A) des erfindungsgemäßen Verfahrens wird mindestens ein Polymer (A) als Granulat bereitgestellt. Das mindestens eine Polymer (A) liegt somit in Teilchenform vor. Das Granulat weist üblicherweise einen D₅₀-Wert von 5 µm bis 5 mm auf, bevorzugt von 50 µm bis 4 mm, besonders bevorzugt von 100 µm bis 2 mm auf, bestimmt mittels Sieben. Als Durchmesser eines Granulatteilchens wird erfindungsgemäß die längste Ausdehnung des Teilchens verstanden. Die Granulatteilchen können erfindungsgemäß in jeder beliebigen Form eingesetzt werden, beispielsweise rund, elliptisch, zylinderförmig etc., sie können eine regelmäßige oder unregelmäßige Form und eine regelmäßige oder unregelmäßige Oberfläche aufweisen.

Das mindestens eine Polymer (A) wird erfindungsgemäß bevorzugt aus thermoplastischen Polymeren ausgewählt. "Thermoplastische Polymere", auch Thermoplasten genannt, bedeuten im Rahmen der Erfindung Polymere, die thermoplastisch verarbeitbar sind, d.h. Polymere, die durch Erhitzen plastisch verformbar werden. Dabei zeichnen sich die thermoplastischen Polymere dadurch aus, dass sie wiederholt durch Erhitzen plastisch verformbar werden. Unter die thermoplastischen Polymere fallen erfindungsgemäß auch thermoplastische Elastomere. Prinzipiell können Thermoplasten jeder Art in dem erfindungsgemäßen Verfahren verwendet werden. Eine Liste geeigneter Thermoplasten kann im Kunststoff-Taschenbuch, Herausgeber Saechtling, 1989 gefunden werden Verfahren zur Herstellung dieser Thermoplasten sind allgemein bekannt und viele Thermoplasten sind kommerziell erhältlich. Beispiele geeigneter Thermoplasten sind Polyamide, Polyester wie Polybutylenterephthalat und Polyethylenterephthalat, Polyurethane, Polycarbonate, vinylaromatische Polymere wie Polystyrole sowie Copolymere und Mischungen davon.

Erfindungsgemäß besonders bevorzugt wird das mindestens eine Polymer (A) aus Polymeren ausgewählt, die mittels Polykondensation herstellbar sind. Diese werden auch Polykondensate genannt. Polykondensation bedeutet die Polymerisation durch einen wiederholten Kondensationsschritt unter Abspaltung einfacher, d.h. niedrigmolekularer Verbindungen wie zum Beispiel Wasser. Zu den am häufigsten eingesetzten Polykondensaten gehören Polyamide, Polyester und Polycarbonate. Weiterhin werden einige Hochleistunaspolvmere durch Polykondensation hergestellt, beispielsweise Polyetherketone, Polyetheretherketone, Polyaryletherketone, Polyimide, Polysulfone, Polyethersulfone und Polyphenylensulfone und Polyphenylensulfide.

Weitere geeignete Polymere sind Polyolefine wie Polyethylenhomo- und copolymere und/oder Polypropylenhomo- oder copolymere, Polyvinylchloride, Poly(meth)acrylate und Mischungen der in diesem Absatz und der vorstehend aufgelisteten thermoplastischen Polymere.

Einige bevorzugte thermoplastische Polymere werden nachfolgend ausführlicher beschrieben.

### 1. Polyamide

Polyamide, die in dem erfindungsgemäßen Verfahren eingesetzt werden, haben üblicherweise`eine Viskositätszahl (inhärente Viskosität, früher Staudinger-Index) von 90 bis 350 ml/g, bevorzugt von 110 bis 240 ml/g, bestimmt gemäß ISO 307 in 0,5 gew.-%iger Lösung des Polymers in 96 %iger Schwefelsäure bei 25 °C.

Bevorzugt werden halbkristalline oder amorphe Polymere mit Molekulargewichten M_{w} von mindestens 5000 g/mol eingesetzt, diese sind beispielsweise in US 2,071,250, US 2,071,251, US 2,130,523, US 2,130,948, US 2,241,322, US 2,312,966, US 2,512,606 und US 3,393,210 beschrieben.

Darin sind beispielsweise Polyamide beschrieben, die aus 7- bis 13-gliedrigen Lactamringen hergestellt wurden, beispielsweise aus Polycaprolactam, Polycaprylolactam und Polylaurolactam und auch Polyamide, die durch Reaktion von Dicarbonsäuren mit Diaminen erhalten wurden.

Als Dicarbonsäuren können beispielsweise Alkandicarbonsäuren mit 6 bis 12 Kohlenstoffatomen eingesetzt werden, bevorzugt mit 6 bis 10 Kohlenstoffatomen und aromatische Dicarbonsäuren. Darunter fallen Adipinsäure, Azelainsäure, Sebazinsäure, Dodecandisäure, Terephthalsäure und/oder Isophthalsäure.

Besonders geeignete Diamine sind Alkandiamine mit 6 bis 12 Kohlenstoffatomen, bevorzugt mit 6 bis 8 Kohlenstoffatomen sowie m-Xylendiamin, Di(4-aminophenyl)methan, Di(4-aminocyclohexyl)methan, 2,2-Di(4-aminophenyl)propan oder 2,2-Di(4-aminocyclohexyl)propan.

Bevorzugte Polyamide sind Polyhexamethylenadipamid, Polyhexamethylensebazamid und Polycaprolactam und auch Nylon-6/6,6, insbesondere mit einem Anteil von 5 bis 95 Gew-% an Caprolactameinheiten. Polycaprolactam (Polvamid-6 oder Nvlon-6) und Polyhexamethylenadipamid (Polyamid-6,6 oder Nylon-6,6) sind besonders bevorzugt. Diese Verbindungen sind zum Beispiel unter dem Markennamen Ultramid^{®} B und Ultramid^{®} A von der BASF SE kommerziell erhältlich.

Zusätzlich sollen Polyamide erwähnt werden, die beispielsweise durch Kondensation von 1,4-Diaminobutan mit Adipinsäure bei erhöhten Temperaturen erhalten werden können (Nylon-4,6). Herstellungsverfahren für Polyamide mit dieser Struktur sind beispielsweise in EP 38094A, EP 38582A und EP 39524A beschrieben. Andere geeignete Polyamide können durch Copolymerisation von zwei oder mehr der vorstehend erwähnten Monomere erhalten werden. Mischungen von mehr als einem Polyamid sind ebenfalls geeignet, wobei das Mischungsverhältnis je nach Wunsch eingestellt werden kann.

Andere Polyamide, die besondere Vorteile aufweisen, sind teilaromatische Copolyamide wie Nylon-6/6T und Nylon-6,6/6,T, die einen Triamingehalt von weniger als 0,5 Gew.-%, bevorzugt weniger als 0,3 Gew-% aufweisen, bezogen auf das Molekulargewicht (EP 299 444 A). Teilaromatische Copolyamide mit geringem Triamingehalt können durch die in EP 129 195 A und EP 129 196 A beschriebenen Verfahren hergestellt werden.

Andere geeignete Polyamide umfassen ungefärbte Polyamide auf Basis von Polyamid-6,6 enthaltend geeignete Stabilisatoren wie Amine. Diese Verbindungen sind als Ultramid^{®}AE-Produkte von der BASF SE erhältlich. Ebenfalls geeignete Polyamide sind glasfaserverstärkte Mischungen auf Basis von Polyamid-6. Derartige Produkte sind als Ultramid^{®}BE von der BASF SE kommerziell erhältlich:

### 2. Polyester

Üblicherweise werden Polyester auf Basis von aromatischen Dicarbonsäuren und aliphatischen und/oder aromatischen Dihydroxyverbindungen eingesetzt.

Eine erste Gruppe bevorzugter Polyester sind Polyalkylenterephthalate, deren Alkoholrest 2 bis 10 Kohlenstoffatome aufweist.

Polyalkylenterephthalate dieser Art sind an sich bekannt. Ihre Hauptkette enthält einen aromatischen Ring, der von der aromatischen Dicarbonsäure abgeleitet ist. Der aromatische Ring kann substituiert sein, beispielsweise durch Halogen wie Chlor oder Brom, oder durch C₁-C₄-Alkylgruppen wie Methyl, Ethyl, iso- oder n-Propyl oder n-, iso- oder tert.-Butylgruppen.

Diese Polyalkylenterephthalate können durch Reaktion aromatischer Dicarbonsäuren oder deren Ester oder esterbildende Derivate mit aliphatischen Dihydroxyverbindungen in bekannter Weise erhalten werden.

Bevorzugte Dicarbonsäuren sind 2,6-Naphthalindicarbonsäure, Terephthalsäure und Isophthalsäure oder Mischungen davon. Bis 32 mol-%, bevorzugt nicht mehr als 10 mol-% der aromatischen Dicarbonsäuren kann durch aliphatische oder cycloaliphatische Dicarbonsäuren wie Adipinsäure, Azelainsäure, Sebazinsäure, Dodecandisäuren und Cyclohexandicarbonsäure ersetzt werden. Die mol-%-Angabe bezieht sich auf das gesamte Molekulargewicht des Polymers.

Bevorzugte aliphatische Dihydroxyverbindungen sind Diole mit 2 bis 8 Kohlenstoffatomen, insbesondere 1,2-Ethandiol, 1,3-Propandiol, 1,4-Butandiol, 1,6-Hexandiol, 1,4-Hexandiol, 1,4-Cyclohexandiol, 1,4-Cyclohexandimethanol und Neopentylglykol oder eine Mischung davon.

Besonders bevorzugte Polyester sind Polyalkylenterephthalate, erhalten aus Alkandiolen mit 2 bis 6 Kohlenstoffatomen. Unter diesen sind besonders Polyethylenterephthalat, Polypropylenterephthalat und Polybutylenterephthalat und Mischungen davon bevorzugt. Ebenfalls bevorzugt sind PET (Polyethylenterephthalat) und/oder PBT (Polybutylenterephthalat), die als weitere Monomereinheiten bis zu 1 Gew.-%, bevorzugt bis zu 0,75 Gew.-% 1,6-Hexandiol und/oder 2-Methyl-1,5-pentandiol enthalten. Die Angaben in Gewichtsprozent beziehen sich auf das Gesamtgewicht des Polyalkylenterephthalats.

Die Viskositätszahl der Polyester liegt üblicherweise im Bereich von 50 bis 220, bevorzugt von 80 bis 160, bestimmt in einer 0,5 gew.-%igen Lösung des Polyesters in einer Mischung aus Phenol und o-Dichlorbenzen im Gewichtsverhältnis von 1 : 1 bei 25 °C gemäß ISO 1628.

Besonders bevorzugt sind Polyester, deren Gehalt an Carboxy-Endgruppen bei bis zu 100 mval/kg Polyester, bevorzugt bis zu 50 mval/kg Polyester und insbesondere bis zu 40 mval/kg Polyester liegt. Polyester dieser Art können beispielsweise nach dem Verfahren der DE 44 01 055 A hergestellt werden. Der Gehalt an Carboxy-Endgruppen wird üblicherweise durch Titrationsmethoden bestimmt, beispielsweise mittels Potentiometrie.

Für das erfindungsgemäße Verfahren geeignete Zusammensetzungen umfassen auch Mischungen von Polyestern, die von PBT verschieden sind, beispielsweise Polyethylenterephthalat (PET) und/oder Polycarbonat. Das Verhältnis beispielsweise des Polyethylenterephthalats und/oder des Polvcarbonats in der Mischuna liegt dabei bevorzugt bei bis zu 50 Gew.-%, insbesondere bei 10 bis 30 Gew.-% auf Basis von 100 Gew.-% des Gesamtsgewichts von (A).

Geeignete Polyester zur Verwendung im erfindungsgemäßen Verfahren umfassen auch bioabbaubare Polyester wie statistische aliphatisch aromatische Copolyester auf Basis von beispielsweise Adipinsäure, Bernsteinsäure, Sebazinsäure, 1,4-Butandiol und 1,3-Butandiol. Diese Produkte sind nicht nur bioabbaubar, deren Monomere sind auch aus erneuerbaren Quellen erhältlich. Bioabbaubare Polyester sind beispielsweise unter der Marke Ecoflex^{®} von der BASF SE erhältlich.

Es ist auch vorteilhaft, Recyclingmaterialien zu verwenden, beispielsweise PET, gegebenenfalls in Mischung mit weiteren Polyalkylenterephthalaten wie PBT.

Die recycelten Materialien können entweder pelletiert oder als gemahlenes Material eingesetzt werden. Da Polyester während der Verarbeitung aufgrund von Feuchtigkeitsspuren hydrolytischer Spaltung unterliegen, ist es empfehlenswert, das recycelte Material vorher zu trocknen. Der Rest Feuchtigkeitsgehalt nach dem Trocknen liegt vorzugsweise bei 0,01 bis 0,7 %, insbesondere bei 0,2 bis 0,6 %, bezogen auf das Gesamtgewicht des Polyesters.

Eine weitere geeignete Gruppe von Polyestern sind vollaromatische Polyester, die aus aromatischen Dicarbonsäuren und aromatischen Dihydroxyverbindungen hergestellt werden.

Geeignete aromatische Dicarbonsäuren sind die vorstehend zur Herstellung von Polyalkylenterephthalaten aufgeführten Verbindungen. Bevorzugt werden Mischungen aus 5 bis 100 mol-% Isophthalsäure und 0 bis 95 mol-% Terephthalsäure, insbesondere von 50 bis 80 mol-% Terephthalsäure und mit 20 bis 50 mol-% Isophthalsäure eingesetzt, bezogen auf die Mischung.

### 3. Polycarbonate

Als das mindestens eine Polymer (A) können Homopolycarbonate oder Copolycarbonate eingesetzt werden. Bevorzugt werden Homo- und Copolycarbonate mit Bisphenol A eingesetzt. Geeignete Polycarbonate können in bekannter Weise verzweigt sein, beispielsweise durch den Einbau von 0,05 bis 2,0 mol-%, auf Basis der gesamten Bisphenolmenge einer mindestens trifunktionellen Verbindung, beispielsweise einer Verbindung, die drei oder mehr phenolische OH-Gruppen hat.

Bevorzugte Polycarbonate haben Molekulargewichte M_{w} (Massenmittel) von 10 000 bis 200 000 g/mol. bevorzugt von 20 000 bis 80 000 g/mol.

Die Polycarbonate können beispielsweise durch Reaktion von Diphenolen mit Phosgen an der Grenzfläche oder mit Phosgen in homogener Phase (bekannt als Pyridinverfahren) hergestellt werden, und in jedem Fall kann das gewünschte Molekulargewicht in bekannter Weise durch Verwendung einer geeigneten Menge eines Kettenabbruchsagens eingestellt werden.

Besonders bevorzugt sind erfindungsgemäß Polyamide, insbesondere Polyamid-6,6 und Polyamid-6. Diese Polyamide sind beispielsweise unter dem Markennamen Ultramid^{®} bei der BASF SE kommerziell erhältlich. Ebenfalls erfindungsgemäß bevorzugt sind Polyester, insbesondere Polybutylenterephthalate (PBT). Derartige PBTs sind unter der Marke Ultradur^{®} bei der BASF SE erhältlich. Ebenso besonders bevorzugt sind Polycarbonate. Weiterhin bevorzugt sind Copolymere enthaltend Polyamid, Polyester und/oder Polycarbonat und Mischungen davon. Besonders bevorzugt ist das mindestens eine Polymer (A) ausgewählt aus der Gruppe bestehend aus Polyamiden, Polyestern, Polycarbonaten, Copolymeren enthaltend Polyamid, Polyester und/oder Polycarbonat und Mischungen aus diesen Homopolymeren und/oder Copolymeren.

Die nach dem erfindungsgemäßen Verfahren herstellbaren Polymermischungen enthalten üblicherweise 1 bis 99,9 Gew.-% mindestens eines Polymers (A), bevorzugt 5 bis 99,9 Gew.-% und besonders bevorzugt 8 bis 99,9 Gew.-% mindestens eines Polymers (A), bezogen auf das Gesamtgewicht der Polymermischung. Als (A) können ein, zwei oder mehr Polymere eingesetzt werden. Werden zwei oder mehr Polymere als (A) eingesetzt, kann in Schritt (a) eine Mischung aus Granulaten der zwei oder mehr Polymere verwendet werden, es kann jedoch auch zunächst aus den zwei oder mehr Polymeren ein Mischgranulat hergestellt werden, dessen Teilchen eine Mischung aus zwei oder mehr Polymeren enthalten, beispielsweise durch gemeinsames Extrudieren. Mischgranulate und Granulate aus einem Polymer können auch gemeinsam verwendet werden.

Der Gehalt der mindestens einen weiteren Komponente (B) in der Polymermischung liegt üblicherweise bei 0,1 bis 99 Gew.-%, bevorzugt bei 0,1 bis 95 Gew-% und insbesondere bevorzugt bei 0,1 bis 92 Gew.-%, bezogen auf das Gesamtgewicht der Polymermischung. Die Menge des mindestens einen Polymers (A) in den erfindungsgemäßen Polymermischungen liegt üblicherweise bei 1 bis 99,9 Gew.-%, bevorzugt bei 5 bis 99,9 Gew-% und insbesondere bevorzugt bei 8 bis 99,9 Gew.-%, bezogen auf das Gesamtgewicht der Polymermischungen.

Die vorgenannten Bereiche für die Konzentrationen umfassen dabei die Polymermischungen im engeren Sinne als auch so genannte Masterbatchs als Zwischenprodukte, in denen die Komponente (B) in stark angereicherter Form in (A) bereitgestellt wird.
Üblicherweise enthält die Polymermischung 50 bis 99,9 Gew-% mindestens eines Polymers (A) und 0,1 bis 50 Gew.-% Komponente (B), bevorzugt 90 bis 99,9 Gew-% mindestens eines Polymers (A) und 0,1 bis 10 Gew.-% Komponente (B) und besonders bevorzugt enthält die Polymermischung 95 bis 99,9 Gew-% mindestens eines Polymers (A) und 0,1 bis 5 Gew.-% Komponente (B), jeweils bezogen auf das Gesamtgewicht der Polymermischung.

Als Komponente (B) können prinzipiell alle Verbindungen und Substanzen eingesetzt werden, die sich in geeigneter Form, beispielsweise als Lösung, als Kolloid, als Dispersion, Suspension oder Emulsion versprühen lassen. Dazu gehören niedermolekulare organische und anorganische Verbindungen, höhermolekulare organische Verbindungen wie Polymere, höhermolekulare anorganische Verbindungen wie Silikasole etc. Weiterhin können organische und anorganische Nanopartikel mit dem erfindungsgemäßen Verfahren aufgebracht werden. Organische Nanopartikel sind beispielsweise Polymerlatices, anorganische Nanopartikel können beispielsweise feinteilige Metalloxide sein.

Die mindestens eine Komponente (B) ist erfindungsgemäß bevorzugt ausgewählt aus Nanopartikeln und/oder Polymeren.

Die Nanopartikel haben üblicherweise einen zahlengewichteten mittleren Teilchendurchmesser (auch als Teilchengröße bezeichnet) (D₅₀-Wert) von 1 bis 500 nm, bevorzugt von 1 bis 250 nm, mehr bevorzugt von 1 bis 100 nm, besonders bevorzugt von 1 bis 50 nm, und insbesondere bevorzugt von 1 bis 20 nm. Die durchschnittliche Teilchengröße und die Teilchengrößenverteilung können durch dynamische Lichtstreuung, Ultrazentrifuge (besonders geeignet für die Bestimmung des mittleren. Teilchendurchmessers von kolloidalen Lösungen), Flussfeld-Fließ-Fraktionierung (field flow fractionation) oder elektronenmikroskopisch bestimmt werden (TEM und/oder SEM). Es können dabei Nanopartikel mit enger sowie mit breiter Teilchengrößenverteilung eingesetzt werden.

Die Nanopartikel weisen vorzugsweise ein Verhältnis von Länge (größte Ausdehnung des Nanopartikels) zu Durchmesser (kleinste Ausdehnung des Nanopartikels)von 1 bis 50, bevorzugt von 1 bis 20, besonders bevorzugt von 1 bis 5 und insbesondere von 1 bis 3 auf.

Prinzipiell können alle dem Fachmann als Nanopartikel bekannten Materialien als mindestens eine weitere Komponente (B) eingesetzt werden. Dazu gehören kohlenstoffhaltige Nanopartikel wie Fullerene, Kohlenstoffnanoröhren und Ruß, Oxide und Oxidhydrate von Metallen und Halbmetallen, Metalle und Metallsulfide.

Verfahren zur Herstellung von Nanopartikeln sind dem Fachmann grundsätzlich bekannt. Mittels mechanisch-physikalischer Verfahren können nach der Top-Down-Strategie aus Mikropartikeln Nanopartikel erhalten werden, diese Methode findet beispielsweise bei der Herstellung metallischer und keramischer Nanopartikel Verwendung. Dabei werden Mikropartikel beispielsweise durch Mahlen in Hochenergie-Kugelmühlen oder mittels Reaktivmahlung zerkleinert. Chemisch-physikalische Herstellungsverfahren folgen der Bottom-Up-Strategie, wonach komplexere Strukturen gezielt aus Atomen bzw. Molekülen, ggf. unter Ausnutzung von Selbstorganisationsmechanismen der Atome/Moleküle aufgebaut werden. Darunter fallen zum Beispiel das in flüssiger Phase durchgeführte Sol-Gel-Verfahren, hydrothermale Prozesse und Fällungsverfahren sowie in der Gasphase durchgeführte Verfahren wie Plasmaverfahren, Flammenhydrolyse und Sprühpyrolyse. Viele Nanopartikel sind auch kommerziell beispielsweise in Form von kolloidalen Lösungen (Solen) erhältlich.

Verfahren zur Herstellung von Solen sind dem Fachmann bekannt und werden beispielsweise in Iler, Ralph K. "The Chemistry of Silica", Kapitel 4: "Colloidal Silica-Concentrated Sols", John Wiley & Sons, New York, 1979, ISBN:0-471-02404-X, Seiten 331-343 beschrieben.

Sol-Gel-Verfahren zur Herstellung von Oxiden und/oder Oxidhydraten von Metallen und/oder Halbmetallen sind dem Fachmann ebenfalls bekannt. Solche Sol-Gel-Verfahren werden beispielsweise in Sanchez et al., Chemistry of Materials 2001, 13, 3061-3083 beschrieben.

Erfindungsgemäß bevorzugt werden die Nanopartikel ausgewählt aus den Oxiden und Oxidhydraten von Metallen und Halbmetallen, insbesondere aus den Oxiden und Oxidhydraten von Si, Ti, Fe, Ba, Zr, Zn, Al, Ga, In, Sb, Bi, Cu, Ge, Hf, La, Li, Nb, Na, Ta, Y, Mo, V, Sn und Mischungen davon. Besonders bevorzugt werden die Nanopartikel ausgewählt aus den Oxiden und Oxidhydraten von Si, Ti, und Ba, insbesondere von Si.

Die als mindestens eine weitere Komponente (B) eingesetzten Polymere können als Lösungen bereitgestellt werden, sie können jedoch auch als Nanopartikel vorliegen, beispielsweise hergestellt mittels Emulsions- oder Mikroemulsionspolymerisation. Letzteres gilt insbesondere für vernetzte Polymere. Erfindungsgemäß bevorzugt werden verzweigte und/oder hyperverzweigte Polymere als mindestens eine weitere Komponente (B) verwendet. Weiterhin bevorzugt werden die als (B) eingesetzten Polymere ausgewählt aus Polyethyleniminen, Polyetheraminen und Mischungen davon.

Das Merkmal "hyperverzweigt" bedeutet im Rahmen der vorliegenden Erfindung, dass der Verzweigungsgrad DB (degree of branching) der betreffenden Polymere, der definiert ist als DB (%) = 100 x (T + Z) / (T + Z + L), wobei T die mittlere Anzahl der terminal gebundenen Monomereinheiten, Z die mittlere Anzahl der Verzweigungen bildenden Monomereinheiten und L die mittlere Anzahl der linear gebundenen Monomereinheiten in den Makromolekülen der jeweiligen Polymere bedeuten, von 10 bis 98 %, bevorzugt von 25 - 90 % und besonders bevorzugt von 30 bis 80 % beträgt.

Im Rahmen der vorliegenden Erfindung kommen besonders bevorzugt hochfunktionelle hyperverzweigte Polyethylenimine, hyperverzweigte Polyetheramine und Mischungen davon als mindestens eine weitere Komponente (B) zum Einsatz.

Unter einem hochfunktionellen hyperverzweigten Polyethylenimin ist im Rahmen dieser Erfindung ein Produkt zu verstehen, das neben sekundären und tertiären Aminogruppen, die das Polymergerüst bilden, end- oder seitenständig weiterhin im Mittel mindestens drei, bevorzugt mindestens sechs, insbesondere bevorzugt mindestens zehn funktionelle Gruppen aufweist. Bei den funktionellen Gruppen handelt es sich vorzugsweise um primäre Amino-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen hyperverzweigten Polyethylenimine der vorliegenden Erfindung weisen vorzugsweise nicht mehr als 500 end- oder seitenständige funktionelle Gruppen, insbesondere nicht mehr als 100 end- oder seitenständige Gruppen auf.

Unter Polyethyleniminen im Sinne der vorliegenden Erfindung sollen sowohl Homo- als auch Copolymerisate verstanden werden, welche beispielsweise nach den Verfahren in Ullmann's Encyclopedia of Industrial Chemistry, "Aziridines", electronic release (Artikel veröffentlicht am 15.12.2006) oder gemäß WO-A 94/12560 erhältlich sind.

Die Homopolymerisate sind vorzugsweise durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann mittels ¹³ C-NMR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) im Bereich von 100 bis 3.000.000, insbesondere von 800 bis 2.000.000 g/mol auf.

Die durch katalysierte Polymerisation von Aziridinen erhaltenen Polyethylenimine weisen dabei üblicherweise ein gewichtsmittleres Molekulargewicht im Bereich von 800 bis 50.000 g/mol, insbesondere von 1.000 bis 30.000 g/mol auf. Höhermolekulare Polyethylenimine sind insbesondere durch Umsetzung der genannten Polyethylenimine mit difunktionellen Alkylierungsverbindungen wie beispielsweise Chlormethyloxiran oder 1,2-Dichlorethan oder durch Ultrafiltration von Polymeren mit einer breiten Molekulargewichtsverteilung, wie zum Beispiel in EP-A 873371 und EP-A 1177035 beschrieben, oder durch Vernetzung erhältlich.

Darüber hinaus eignen sich als Komponente (B) vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin- Isocyanateinheit oder ein Halogenatom aufweisen. Als Beispiele seien Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethylen-iminen sind u.a. aus den o.g. Schriften sowie EP-A 895 521 und EP-A 25 515 bekannt. Vernetzte Polyethylenimine weisen üblicherweise ein mittleres Molekulargewicht von mehr als 20.000 g/mol auf.

Weiterhin kommen als Komponente (B) gepfropfte Polyethylenimine in Betracht, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine sind amidierte Polymerisate, die üblicherweise durch Umsetzung von Polyethyleniminen mit Carbonsäuren, deren Ester oder Anhydriden, Carbonsäureamiden oder Carbonsäurehalogeniden erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkoxylierte Polyethylenimine, die beispielsweise durch Umsetzung von Polyethylenimin mit Ethylenoxid und/oder Propylenoxid und/oder Butylenoxid erhältlich sind. Auch derartige alkoxylierte Polymerisate sind anschließend vernetzbar.

Als weitere als Komponente (B) geeignete Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so dass sich weitere Einzelheiten hierzu erübrigen.

Die als Komponente (B) eingesetzten Polyethylenimine weisen vorzugsweise ein gewichtsmittleres Molekulargewicht, bestimmt durch Lichtstreuung, von 800 bis 50000 g/mol, besonders bevorzugt von 1000 bis 40000 g/mol, insbesondere von 1200 bis 30000 g/mol, auf. Das mittlere Molekulargewicht (Gewichtsmittel) wird vorzugsweise mittels Gelpermeationschromatographie mit Pullulan als Standard in einer wässrigen Lösung (Wasser; 0,02 mol/l Ameisensäure; 0,2 mol/l KCl) bestimmt.

Eine nach DIN 53176 bestimmte Aminzahl der als Komponente (B) eingesetzten Polyethylenimine im Bereich von 50 bis 1000 mg KOH/g ist günstig. Vorzugsweise weist das als Komponente (B) eingesetzte Polyethylenimin eine Aminzahl von 100 bis 900 mg KOH/g nach DIN 53176 auf, ganz bevorzugt von 150 bis 800 mg KOH/g.

Unter einem hochfunktionellen hyperverzweigten Polyetheramin ist im Rahmen dieser Erfindung ein Polymer zu verstehen, das neben den Ethergruppen und den Aminogruppen, die das Polymergerüst bilden, end- oder seitenständig weiterhin im Mittel mindestens drei, bevorzugt mindestens sechs, insbesondere bevorzugt mindestens zehn funktionelle Gruppen aufweist. Bei den funktionellen Gruppen handelt es sich vorzugsweise um OH-Grüppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen hyperverzweigte Polyetheraminpolyole der vorliegenden Erfindung weisen vorzugsweise nicht mehr als 500 end- oder seitenständige funktionelle Gruppen, insbesondere nicht mehr als 100 end- oder seitenständige Gruppen auf.

Polyetheramine sind erhältlich durch Umsetzung von
- mindestens einem tertiären Amin mit funktionellen Hydroxygruppen, insbesondere mindestens einem Di-, Tri- oder Tetraalkanolamin, optional in Geaenwart von
- sekundären Aminen, welche Hydroxylgruppen als Substituent tragen, insbesondere Dialkanolaminen und/oder optional in Gegenwart von
- di- oder höherfunktionellen Polyetherpolyolen,
wobei die Umsetzung vorzugsweise in Gegenwart eines Umetherungs- und Veretherungskatalysators durchgeführt wird.

Darüber hinaus ist eine weiter bevorzugte Ausgestaltung der als Komponente (B) eingesetzten Polymere erhältlich durch weitere Umsetzung der wie vorgenannt erhältlichen Polyetheramine durch Umsetzung mit Ethylenoxid und/oder Propylenoxid und/oder Butylenoxid, insbesondere Polyethylenimine mit einem inneren Polyethylenoxidblock und mit einem äußeren Polypropylenoxidblock wie in der Europäischen Patentanmeldung mit den Aktenzeichen 07120395.4 beschrieben sowie alkoxylierte Polyethylenimine wie in der Europäischen Patentanmeldung mit den Aktenzeichen 07120393.9 beschrieben.

Vorzugsweise weist das als Komponente (B) eingesetzte Polyetheramin im Mittel mindestens 3 funktionelle OH-Gruppen pro Molekül auf, d.h. die mittlere OH-Funktionalität beträgt mindestens 3. Besonders bevorzugt ist das als Komponente (B) eingesetzte Polyetheramin erhältlich durch Umsetzung von mindestens einem Trialkanolamin optional mit Dialkanolaminen und/oder optional mit di- oder höherfunktionellen Polyetherolen.

Die hyperverzweigten Polyetheramine (B) sind nach der Reaktion, also ohne weitere Modifikation, mit Hydroxylgruppen terminiert. Sie lösen sich gut in verschiedenen Lösemitteln.

Beispiele für derartige Lösungsmittel sind aromatische und/oder (cyclo)aliphatische Kohlenwasserstoffe und deren Gemische, halogenierte Kohlenwasserstoffe, Ketone, Ester und Ether.

Eine nach DIN 53240 bestimmte OH-Zahl der als Komponente (B) eingesetzten Polyetheramine im Bereich von 50 bis 1000 mg KOH/g ist günstig. Vorzugsweise weist die Komponente B) eine OH-Zahl von 100 bis 900 mg KOH/g nach DIN 53240 auf, ganz bevorzugt von150 bis 800 mg KOH/g.

Das gewichtsmittlere Molgewicht M_{w} der als Komponente (B) eingesetzten Polyetheramine liegt zumeist zwischen 1000 und 500000, bevorzugt von 2000 bis 300000 g/mol, das zahlenmittlere Molgewicht Mₙ von 500 bis 50000, bevorzugt zwischen 1000 und 40000 g/mol, gemessen mittels Gelpermeationschromatographie (GPC) mit Hexafluorisopropanol als mobiler Phase und Polymethylmethacrylat (PMMA) als Standard.

In Schritt (b) des erfindungsgemäßen Verfahrens wird die mindestens eine weitere Komponente (B) in Form einer flüssigen Lösung und/oder Dispersion in einem Dispersionsmedium bereitgestellt. Das Dispersionsmedium ist dabei üblicherweise ebenfalls flüssig.

Flüssig bedeutet im Rahmen der vorliegenden Erfindung, dass die Lösung/Dispersion bzw. das Dispersionsmedium fließfähig ist und sich mit Hilfe des gewählten Zerstäubers in kleine Tröpfchen zerteilen lässt. Als Dispersionen werden im Rahmen der vorliegenden Erfindung mehrphasige Gemische mit mindestens einer flüssigen Phase und mindestens einer weiteren flüssigen und/oder festen Phase bezeichnet, beispielsweise Emulsionen und Suspensionen. Als Suspension wird im Rahmen der vorliegenden Erfindung eine Dispersion von festen Teilchen in einer flüssigen Phase verstanden, insbesondere Suspensionen von Nanopartikeln oder teilchenförmigen Polymeren. Emulsionen sind erfindungsgemäß mehrphasige Gemische mit mindestens zwei flüssigen Phasen.

Das Dispersionsmedium wird üblicherweise aus Lösungsmitteln und Lösungsmittelgemischen ausgewählt, beispielsweise aus Wasser, aliphatischen C₁- bis C₆- Alkoholen, gegebenenfalls alkylierten aromatischen Kohlenwasserstoffen, (cyclo)aliphatischen Kohlenwasserstoffen, Alkansäurealkylestern, Ketonen, alkoxylierten Alkansäurealkylestern, halogenierten Kohlenwasserstoffen und Mischungen davon.

Besonders bevorzugt sind ein- oder mehrfach alkylierte Benzole und Naphthaline, Ketone, Alkansäurealkylester und alkoxylierte Alkansäurealkylester sowie deren Gemische.

Als aromatische Kohlenwasserstoffgemische sind solche bevorzugt, die überwiegend aromatische C₇- bis C₁₄-Kohlenwasserstoffe umfassen und einen Siedebereich von 110 bis 300°C umfassen können, besonders bevorzugt sind Toluol, o-, m- oder p-Xylol, Trimethylbenzolisomere, Tetramethylbenzolisomere, Ethylbenzol, Cumol, Tetrahydronaphthalin und solche enthaltende Gemische.

Beispiele dafür sind die Solvesso®-Marken der Firma ExxonMobil Chemical, besonders Solvesso® 100 (CAS-Nr. 64742-95-6, überwiegend C₉- und C₁₀-Aromaten, Siedebereich etwa 154-178°C), 150 (Siedebereich etwa 182-207°C) und 200 (CAS-Nr. 64742-94-5), sowie die Shellsol®-Marken der Firma Shell. Kohlenwasserstoffgemische auf Paraffinen, Cycloparaffinen und Aromaten sind auch unter den Bezeichnungen Kristallöl (beispielsweise Kristallöl 30, Siedebereich etwa 158-198°C oder Kristallöl 60: CAS-Nr. 64742-82-1), Testbenzin (beispielsweise ebenfalls CAS-Nr. 64747-82-1) oder Solventnaphtha (leicht: Siedebereich etwa 155-180°C. schwer: Siedebereich etwa 225-300°), im Handel erhältlich. Der Aromatengehalt derartiger Kohlenwasserstoffgemische beträgt in der Regel mehr als 90 Gew.-%, bevorzugt mehr als 95, besonders bevorzugt mehr als 98 und ganz besonders bevorzugt mehr als 99 Gew.-%. Es kann sinnvoll sein, Kohlenwasserstoffgemische mit einem besonders verringerten Gehalt an Naphthalin einzusetzen.

Halogenierte Kohlenwasserstoffe sind beispielsweise Chlorbenzol und Dichlorbenzol oder dessen Isomerengemische.

Ester sind beispielsweise n-Butylacetat, Ethylacetat, 1-Methoxypropylacetat-2 und 2-Methoxyethylacetat.

Ether sind beispielsweise THF, Dioxan sowie die Dimethyl-, Diethyl- oder Di-n-butylether von Ethylenglykol, Diethylenglykol, Triethylenglykol, Propylenglykol, Dipropylenglykol oder Tripropylenglykol.

Ketone sind beispielsweise Aceton, 2-Butanon, 2-Pentanon, 3-Pentanon, Hexanon, iso-Butyl-methylketon, Heptanon, Cyclopentanon, Cyclohexanon oder Cycloheptanon.

(Cyclo)aliphatische Kohlenwasserstoffe sind beispielsweise Dekalin, alkyliertes Dekalin und Isomerengemische von geradlinigen oder verzweigten Alkanen und/oder Cycloalkynen.

Weiterhin bevorzugt sind n-Butylacetat, Ethylacetat, 1-Methoxy-2-propylacetat, 2-Methoxyethylacetat, 2-Butanon, iso-Butyl-methylketon sowie deren Gemische, insbesondere mit den oben aufgeführten aromatischen Kohlenwasserstoffgemischen.

Derartige Gemische können im Volumenverhältnis 5:1 bis 1:5 erstellt werden, bevorzugt im Volumenverhältnis 4:1 bis 1:4, besonders bevorzugt im Volumenverhältnis 3:1 bis 1:3 und ganz besonders bevorzugt im Volumenverhältnis 2:1 bis 1:2.

Bevorzugte Lösungsmittel sind Butylacetat, Methoxypropylacetat, iso-Butylmethylketon, 2-Butanon, Solvesso®-Marken und Xylol.

Weiterhin als Lösungsmittel geeignet können für die Polyetheramine zum Beispiel Wasser, Alkohole, wie Methanol, Ethanol, Butanol, Alkohol/Wasser-Mischungen, Aceton, 2-Butanon, Dimethylformamid, Dimethylacetamid, N-Methylpyrrolidon, N-Ethylpyrrolidon, Ethylencarbonat oder Propylencarbonat sein.

Die in Schritt (b) bereitgestellte und in Schritt (c) eingesetzte Lösung und/oder Dispersion der mindestens einen weiteren Komponente (B) enthält üblicherweise 1 bis 50 Gew.-% mindestens einer weiteren Komponente (B), bevorzugt 5 bis 50 Gew.-% und besonders bevorzugt 5 bis 30 Gew.-%, bezogen auf das Gesamtgewicht der eingesetzten Lösung/Dispersion. Die Lösung/Dispersion kann eine, zwei oder mehr Komponenten (B) enthalten.

In Schritt (c) des erfindungsgemäßen Verfahrens wird eine Lösung und/oder Dispersion mindestens einer Komponente (B) in Form sehr feiner Tröpfchen auf das als Granulat vorliegende mindestens eine Polymer (A) aufgebracht. Die durch Zerstäubung hergestellten Tröpfchen werden auf der Oberfläche des Granulats abgelagert, und die beispielsweise als Nanopartikel in den Tröpfchen enthaltene mindestens eine Komponente (B) wird im dispergierten Zustand auf das Granulat aufgebracht. Das zur Herstellung der Dispersion und/oder Lösung von (B) eingesetzte, bevorzugt flüssige Dispersionsmedium wird anschließend entfernt, üblicherweise durch Trocknen des Granulats. Durch anschließendes Schmelzmischen der mit (B) beschichteten Granulate kann eine weitere Homogenisierung der Mischung umfassend (A) und (B) erreicht werden. Insbesondere können auf diese Weise Polymernanokomposite (Mischungen aus Polymer und Nanopartikel) mit deutlich geringer agglomerierten Nanopartikeln hergestellt werden, die bessere rheologische, mechanische und thermische Eigenschaften aufweisen können.

Als Zerstäuber können die üblichen, dem Fachmann bekannten Vorrichtungen wie Einstoffdruckdüsen, darunter turbulenz- und strahlbildende Düsen (hydraulische Zerstäuber) sowie lamellenbildende Düsen, Zweistoff- Zerstäuber mit äußerer oder innerer Mischung (pneumatische Zerstäuber), Rotationszerstäuber und Ultraschallzerstäuber eingesetzt werden. Eine Übersicht über dem Fachmann bekannte Zerstäubungstechnik kann beispielsweise in Perry's Chemical Engineers', Handbook, 8th Edition, 2008, Herausgeber D.W. Green und R.H. Perry, Seiten 14-93 bis 14-95 gefunden werden. Erfindungsgemäß werden Zerstäuber in Schritt (c) eingesetzt, die Tröpfchen mit einem mittleren Durchmesser von 0,5 bis 10 merzeugen, berechnet aus der mittels dynamischer Lichtstreuung bestimmten Teilchengrößenverteilung. Diese Bestimmung kann beispielsweise mit dem Gerät Spraytec der Firma Malvern durchgeführt werden.

Erfindungsgemäß bevorzugt werden in Schritt (c) Ultraschallzerstäuber, auch Ultraschallvernebler genannt, eingesetzt. Ultraschallzerstäuber finden in verschiedensten Bereichen Verwendung, beispielsweise als Vernebler von Wasser zur Luftbefeuchtung oder zu medizinischen Zwecken in Inhalatoren. Für das erfindungsgemäße Verfahren geeignete Ultraschallsysteme werden beispielsweise von der Fa. SONOSYS^{®} Ultraschallsysteme GmbH, Neuenbürg (Deutschland) angeboten. Erfindungsgemäß werden unter Ultraschallzerstäuber Geräte verstanden, die in einem Frequenzbereich von 25 kHz bis 5 MHz arbeiten. Erfindungsgemäß bevorzugt wird der Ultraschallzerstäuber in Schritt (c) im Frequenzbereich von 750 kHz bis 3 MHz betrieben. Dieser Frequenzbereich wird auch als Megasonic bezeichnet.

Bevorzugt werden erfindungsgemäß Dispersionsmedien mit einer Oberflächenspannung von 35 bis 100 mN/m eingesetzt, bestimmt bei 25°C. Ebenfalls bevorzugt werden Dispersionsmedien mit einer Viskosität von 0,1 bis 500 mPas, besonders bevorzugt 1 bis100 mPas, gemessen bei der Einsatztemperatur, d.h. der bei der Zerstäubung herrschenden Temperatur. Geeignete Dispersionsmedien sind beispielsweise Wasser und Mischungen aus Lösungsmittel(n) und Wasser mit einer Oberflächenspannung von 35 bis 100 mN/m, gemessen bei 25°C. Dies ist insbesondere bei Verwendung eines Ultraschallzerstäubers bevorzugt, da es dabei besonders vorteilhaft ist, für die Lösung/Dispersion der mindestens einen weiteren Komponente (B) Dispersionsmedien mit Viskositäten und Oberflächenspannungen ähnlich denen von Wasser einzusetzen.

Schritt (c) kann in allen Vorrichtungen durchgeführt werden, in denen eine gute Verteilung des durch den Zerstäuber hergestellten Tröpfchennebels der Lösung und/oder Suspension von (B) auf das als Granulat vorliegende Polymer ermöglicht wird, beispielsweise Säulen. Erfindungsgemäß bevorzugt liegt das Granulat in Schritt (c) als Festbett oder Wirbelbett vor. Das Wirbelbett kann beispielsweise mittels Durchleiten eines Inertgasstroms, der gleichzeitig zum Trocknen des in Schritt (c) besprühten Granulats dient, erzeugt werden.

In Schritt (c) kann eine Lösung und/oder Dispersion enthaltend eine, zwei oder mehr der mindestens einen weiteren Komponente (B) eingesetzt werden, es können jedoch auch mehr als eine Lösung/Dispersion in Schritt (c) eingesetzt werden, beispielsweise kann zunächst eine Lösung und/oder Dispersion einer weiteren Komponente (B) und anschließend eine Lösung und/oder Dispersion einer zweiten weiteren Komponente (B) auf das Granulat aufgebracht werden und so fort.

Üblicherweise wird Schritt (c) solange durchgeführt, bis die gewünschte Menge an Komponente (B) auf das Granulat aufgebracht ist. Dies dauert üblicherweise 0,5 bis 60 Minuten.

Vorzugsweise wird die Temperatur, bei der Schritt (c) durchgeführt wird, mit dem zur Herstellung der Lösung und/oder Dispersion von (B) eingesetzte Dispersionsmedium abgestimmt, dies bedeutet, das flüssige Dispersionsmedium soll bei den in Schritt (c) herrschenden Temperaturen leicht entfernbar sein, insbesondere leicht verdampfen.

Erfindungsgemäß bevorzugt wird Schritt (c) bei Temperaturen von mindestens 10°C, bevorzugt von mindestens 20°C und besonders bevorzugt von mindestens 30°C durchgeführt.

In Schritt (d) wird das in Schritt (c) erhaltene Granulat getrocknet. Erfindungsgemäß bedeutet "trocknen", dass das in Schritt (c) mit der Lösung und/oder Dispersion von (B) auf das Granulat aufgebrachte Dispersionsmedium entfernt wird. Dies kann beispielsweise mittels Durchleiten eines Inertgasstroms erfolgen. Als "Inertgas" wird erfindungsgemäß ein gasförmiger Stoff oder Stoffgemisch verstanden, das weder mit dem mindestens einen Polymer (A) noch mit der mindestens einen Komponente (B) reagiert. Dies kann je nach Auswahl von (A) und (B) unterschiedlich sein. Als Inertgas eignen sich beispielsweise N₂, He, Ar, bei sauerstoffunempfindlichen Materialien auch Luft.

Der Inertgasstrom weist dabei bevorzugt eine Temperatur von mindestens 20°C und besonders bevorzugt von mindestens 100°C auf. Dabei liegt die Temperatur des verwendeten Inertgasstroms vorzugsweise unterhalb der Zersetzungstemperatur bzw. der Glasübergangs- bzw. Schmelztemperatur der mindestens einen Komponente (B) sowie des mindestens einen Polymers (A).

An Schritt (d) kann sich Schritt (e) anschließen, in dem gegebenenfalls ein oder mehrere Formgebungsschritte durchgeführt werden. Als Formgebungsschritte können alle dem Fachmann bekannten Verarbeitungs- und Weiterverarbeitungsverfahren durchgeführt werden, beispielsweise Schmelzmischen, Extrudieren, Blasformen, Spritzgießen etc. Die nach dem erfindungsgemäßen Verfahren hergestellten Polymermischungen können auch mit weiteren Polymeren gemeinsam weiterverarbeitet werden, insbesondere können sie als so genannte Masterbatchs zum Einbringen der Komponente (B) in andere Polymere bzw. Polymermischungen dienen. Aus den nach dem erfindungsgemäßen Verfahren hergestellten Polymermischungen lassen sich die aus der Kunststoffverarbeitung bekannten Gegenstände wie Fasern, Folien, Halbzeuge und Formkörper erzeugen, beispielsweise Haushaltsartikel, elektronische Bauteile, medizinische Geräte, Kfz-Bauteile, Gehäuse von Elektrogeräten, Gehäuse von Elektronik-Komponenten im Kfz, Kotflügel, Türbeplankung, Heckklappen, Spoiler, Ansaugrohre, Wasserkästen und Gehäuse von Elektrowerkzeugen.

Das erfindungsgemäße Verfahren kann kontinuierlich oder im Batch durchgeführt werden.

Im Folgenden wird die Erfindung anhand von Beispielen erläutert.

### Beispiel 1: Polyamid mit kolloidalem Silika (erfindungsgemäß)

Als Polyamid wird das Ultramid^{®} B27E (BASF SE, Polyamid mit einer Viskositätszahl VZ=150 nach ISO 307 vor Extrusion) eingesetzt. Als Nanopartikel wurde kolloidales Silikasol (Bindzil^{®} CC/360 Eka Chemicals) mit einem mittleren Teilchendurchmesser D₅₀ von 8 nm, berechnet aus der mittels dynamischer Lichtstreuung bestimmten Teilchengrößenverteilung, verwendet.

Das Polyamidgranulat mit einer mittleren Größe von 0,5 bis 2 nm wurde in einem kleinen Festbett im Labormaßstab gepackt. Die Dispersion des kolloidalen Silikasols (30 Gew.-% in Wasser) wurde mit einem Ultraschallzerstäuber bei einer Frequenz von 1 MHz zerstäubt (Sonosys megasonic Atomiser mit Slimline Generator) und der feine Tropfennebel für 2 bis 5 Minuten über die Festbettschüttung geleitet. Ein Strom von Stickstoff mit einer Temperatur von 75 °C wurde gleichzeitig durch die Festbettschüttung geleitet, um das Granulat zu trocknen. Nachdem das Zerstäuben beendet war, wurde das Granulat weitere 5 Minuten in dem Stickstoffstrom getrocknet und als Endprodukt entnommen. Anschließend wurde das Granulat in dem DSM-Miniextruder (Zweischneckenextruder) bei 280 °C mit einer Verweilzeit von 1 Minute bei 250 Umdrehungen/Minute extrudiert. Für einige Messungen wurden mittels Spritzguss (Einspritztemperatur 280 °C) Prüfkörper hergestellt.

### Vergleichsbeispiel 1 (V1): Polyamid ohne Silika-Nanopartikel (nicht erfindungsgemäß)

Das Polyamid aus Beispiel 1 (ohne Nanopartikel) wurde unter den gleichen Bedingungen wie in Beispiel 1 extrudiert und zu Prüfkörpern verarbeitet.

### Vergleichsbeispiel 2 (V2): Polyamid mit 1 Gew.-% Silika-Nanopartikel, in der Schmelze gemischt (nicht erfindungsgemäß)

Das Polyamid aus Beispiel 1 und die kolloidale Silikadispersion aus Beispiel 1 wurden unter den in Beispiel 1 beschriebenen Bedingungen im Miniextruder gemischt, das kolloidale Silikasol wurde heiß eingeführt. Daran schloss sich die in Beispiel 1 beschriebene Herstellung der Prüfkörper an.

Für die Polymermischung aus Beispiel 1 sowie Vergleichsbeispiel 2 wurde jeweils die Größenverteilung der Nanopartikel in der Polymermatrix elektronenmikroskopisch (SEM, Scanning Electron Microscope) bestimmt. Die Ergebnisse sind in Tabelle 1 dargestellt.

**Tabelle 1**

| Statistische Funktion Grundeinheit | **V 2** (nicht erfindungsgemäß) | **Beispiel 1** (erfindungsgemäß) |
|---|---|---|
| Anzahl der untersuchten Nanopartikel | 1075 | 803 |
| | Durchmesser [µm] | Durchmesser [µm] |
| **Mittelwert (zahlengemittelt)** | **2,37** | **0,49** |
| Median | 2,42 | 0,44 |
| Minimum | 0,28 | 0,14 |
| Maximum | 5,87 | 1,69 |
| Standardabweichung | 0,99 | 0,28 |
| Varianz | 0,98 | 0,08 |
| **Mittelwert (massengemittelt)** | **3,09** | **0,81** |

In der nach dem erfindungsgemäßen Verfahren hergestellten Polymermischung sind die Nanopartikel deutlich kleiner als in der Polymermischung, die durch Schmelzmischen der Nanopartikel mit dem Polymer hergestellt wurde. Das Aufbringen der Nanopartikel in Form von feinen Tröpfchen auf das Polymergranulat vermindert die Agglomeration der Nanopartikel zu größeren Teilchen deutlich.

Mit den in Beispiel 1, V1 und V2 hergestellten Prüfkörpern wurden die Zugeigenschaften in Dehnungsexperimenten gemäß ISO 527-2 bestimmt. Das E-Modul wurde gemäß ISO 527-2 ermittelt. Die Ergebnisse sind in der Tabelle 2 zusammengefasst. In der Tabelle sind zudem die Ergebnisse der Bestimmung der Viskositätszahl (VZ) des Polyamids nach DIN 53 727 an 0,5 gew.-%igen Lösungen in 96 Gew.-% Schwefelsäure und des Schmelzflussindexes (MVR) gemäß ISO 1133 bei 270 °C/5kg Belastung dargestellt.

**Tabelle 2**

| | **V1 (nicht erfindungsgemäß)** | **V2 (nicht erfindungsgemäß)** | **Beispiel 1 (erfindungsgemäß)** |
|---|---|---|---|
| Polyamid [Gew.-%] | 100 | 99 | 99 |
| Silika-Nanopartikel [Gew.-%] | 0 | 1 | 1 |
| Total [Gew.-%] | 100 | 100 | 100 |
| Herstellung: | Extrudieren | Schmelzmischen und Extrudieren | Zerstäuber und Extrudieren |
| VZ [ml/g] | 141 | 133 | 135,6 |
| MVR [10g/min] | 51,7 | 54,1 | 69,4 |
| Zugfestigkeit [MPa] | 88,1 | 68,3 | 89,3 |
| E-Modul [MPa] | 2860 | 2841 | 2806 |
| Reißdehnung [%] | 13,2 | 2,4 | 32,1 |

Auffällig ist, dass die erfindungsgemäß hergestellte Polymermischung eine deutlich höhere Reißdehnung zeigt als die beiden Vergleichsversuche, dabei ist die Zugfestigkeit im Vergleich zum ungefüllten Polyamid jedoch praktisch nicht beeinflusst. Auch der Schmelzflussindex (MVR) ist deutlich höher als beim reinen Polyamid, jedoch auch deutlich höher als beim Polyamid, das in der Schmelze zugefügte Nanopartikel enthält. Mit dem erfindungsgemäßen Verfahren lassen sich somit Nanopartikel enthaltende Polymermischungen herstellen, in denen die Nanopartikel deutlich kleiner vorliegen, d.h. weniger Agglomeration der Nanopartikeln bei Herstellung der Mischungen auftritt, und die darüber hinaus verbesserte mechanische Eigenschaften aufweisen sowie eine bessere Verarbeitbarkeit.

### Beispiele 2a und 2b: Polyamid mit Polyethylenimin (erfindungsgemäß)

Das Polyamid aus Beispiel 1 wurde in eine Doppelmantelkolonne eingefüllt. Die Temperatur betrug etwa 170 °C und die Kolonne wurde während des gesamten Versuchs mit heißem Stickstoff durchspült. In der Mitte der Kolonne befand sich der Ultraschallzerstäuber, mit dem die gewünschte Menge (15,6 g/h) Polyethylenimin (Molekulargewicht M_{w}: 1300g/mol; pH 11, Viskosität bei 20°C, 20000 Pas, Lupasol^{®} G 20, BASF SE) als Lösung (10 Gew.-% in Wasser) bei einer Frequenz von 1 MHz auf das Polyamidgranulat aufgesprüht wurde. Kontinuierlich wurde jede Stunde 300 g Granulat für 1h mit Stickstoff vorgewärmt und von der Kolonne oben zugegeben. Entsprechende Mengen des Granulats wurden nach Durchlaufen der Kolonne und Aufbringen der Polyethyleniminlösung unten abgenommen (Beispiel 2a).

Ein Teil des Granulats wurde anschließend im DSM-Miniextruder (Zweischneckenextruder) bei 206 °C mit einer Verweilzeit von 3 Minute bei 250 Umdrehungen/Minute extrudiert (Beispiel 2b).

Von den Proben aus den Beispielen 2a und 2b wurde der Schmelzflussindex gemessen sowie die Viskositätszahl vor und nach Messung des Schmelzflussindexes wie vorstehend beschrieben bestimmt.

### Vergleichsbeispiele 3a und 3b (V3a-b): Polyamid ohne Polyethylenimin (nicht erfindungsgemäß)

Ein Teil des Polyamids wurde direkt für die Messungen verwendet (Vergleichsbeispiel V3a).

Ein Teil des Granulats wurde im DSM-Miniextruder (Zweischneckenextruder) bei 206 °C mit einer Verweilzeit von 3 Minute bei 250 Umdrehungen/Minute extrudiert (Vergleichsbeispiel V3b).

Von den Proben aus den Vergleichsbeispielen 3a und 3b wurde der Schmelzflussindex gemessen sowie die Viskositätszahl vor und nach Messung des Schmelzflussindexes wie vorstehend beschrieben bestimmt.

### Vergleichsbeispiele 4a und 4b (V4a-b): Polyamid mit Polyethylenimin, in der Schmelze gemischt (nicht erfindungsgemäß)

Das Polyamid aus Beispiel 1 wurde in der Schmelze mit der Polyethyleniminlösung aus Beispiel 2 mit einem Zweischneckenextruder bei 280°C bei einer Verweilzeit von 2 min. in der Schmelze gemischt. (Vergleichsbeispiel V4a).

Ein Teil des Granulats aus Vergleichsbeispiel 4a wurde anschließend im DSM-Miniextruder (Zweischneckenextruder) bei 206 °C mit einer Verweilzeit von 3 min. bei 250 Umdrehungen/Minute extrudiert (Vergleichsbeispiel V4b).

Von den Proben aus den Vergleichsbeispielen 4a und 4b wurde der Schmelzflussindex gemessen sowie die Viskositätszahl vor und nach Messung des Schmelzflussindexes wie vorstehend beschrieben bestimmt.

Die Ergebnisse der Messungen der Viskositätszahlen und Schmelzflussindices aus den Beispielen 2a-b, Vergleichsbeispielen 3a-3b und 4a-4b sind in Tabelle 3 zusammengefasst.

**Tabelle 3**

| | Bestandteile | Herstellung | Nachbehandlung | VZ vor MVR [mL/g] | MVR 275°C/5kg [cm³/10 min] | VZ nach MVR [mL/g] |
|---|---|---|---|---|---|---|
| **V3a** | Polyamid | Ausgangspolymer | keine | 165 | 86,9 | 145 |
| **V3b** | Polyamid | Ausgangspolymer | Im Miniextruder 3 min. bei 206 °C | 145 | 150 | 130 |
| **V4a** | Polyamid mit Polyethyleni min | In der Schmelze gemischt | keine | 117 | 185 | 123 |
| **V4b** | Polyamid mit Polyethyleni min | In der Schmelze gemischt | Im Miniextruder 3 min. bei 206 °C | 123 | 170 | 130 |
| **2a** | Polyamid mit Polyethylenimin | Erfindungsgemäß | keine | 165,4 | 125 | 145.2 |
| **2b** | Polyamid mit Polyethylenimin | Erfndungsgemäß | Im Miniextruder 3 min bei 206 °C | 165,1 | 134 | 155,2 |

Der Vergleich von V3 mit Beispiel 2 zeigt, dass bei den erfindungsgemäß hergestellten Polymermischungen ein geringerer Abbau (höhere VZ-Zahl) auftritt (V3b zur 2b) oder aber bei gleichem Abbau der Schmelzflussindex der erfindungsgemäß hergestellten Polymermischung deutlich höher ist, diese somit besser thermoplastisch verarbeitbar sind. Wird die Polymermischung mit dem Polyethylenimin durch Schmelzmischen hergestellt, so tritt ein deutlich stärkerer Abbau (niedrigere VZ-Zahl) als bei den erfin-

## Patentansprüche

1. Verfahren zur Herstellung von Polymermischungen enthaltend mindestens ein Polymer (A) und mindestens eine Komponente (B) umfassend die Schritte
(a) Bereitstellen von (A) als Granulat,
(b) Bereitstellen von (B) als flüssige Lösung und/oder Dispersion in einem Dispersionsmedium,
(c) Aufbringen der in Schritt (b) bereitgestellten Lösung und/oder Dispersion als Tröpfchen auf das in Schritt (a) bereitgestellte Granulat mittels eines Zerstäubers,
(d) Trocknen des in Schritt (c) erhaltenen Granulats und
(e) ggf. Durchführen eines oder mehrerer Formgebungsschritte,
**dadurch gekennzeichnet, dass** die vom Zerstäuber in Schritt c) erzeugten Tröpfchen einen mittleren Durchmesser D₅₀ von 0,5 bis 10 µm aufweisen.

2. Verfahren nach Anspruch 1, **dadurch gekennzeichnet, dass** das in Schritt (a) bereitgestellte Granulat einen D₅₀-Wert von 5 µm bis 5 mm aufweist, bestimmt durch Sieben.

3. Verfahren nach einem der Ansprüche 1 oder 2, **dadurch gekennzeichnet, dass** in Schritt (c) als Zerstäuber ein Ultraschallzerstäuber eingesetzt wird.

4. Verfahren nach Anspruch 3, **dadurch gekennzeichnet, dass** der Ultraschallzerstäuber in Schritt (c) im Frequenzbereich von 25 kHz bis 5 MHz betrieben wird.

5. Verfahren nach einem der Ansprüche 1 bis 4, **dadurch gekennzeichnet, dass** Schritt (c) bei Temperaturen von mindestens 10 °C durchgeführt wird.

6. Verfahren nach einem der Ansprüche 1 bis 5, **dadurch gekennzeichnet, dass** das Granulat in Schritt (c) als Festbett oder Wirbelbett vorliegt.

7. Verfahren nach einem der Ansprüche 1 bis 6, **dadurch gekennzeichnet, dass** in Schritt (d) das Granulat mittels Durchleiten eines Inertgasstroms getrocknet wird.

8. Verfahren nach einem der Ansprüche 1 bis 7, **dadurch gekennzeichnet, dass** das mindestens eine Polymer (A) aus thermoplastischen Polymeren ausgewählt ist.

9. Verfahren nach einem der Ansprüche 1 bis 8, **dadurch gekennzeichnet, dass** das mindestens eine Polymer (A) aus Polymeren ausgewählt ist, die mittels Polykondensation herstellbar sind.

10. Verfahren nach einem der Ansprüche 1 bis 9, **dadurch gekennzeichnet, dass** das mindestens eine Polymer (A) ausgewählt ist aus der Gruppe bestehend aus Polyamiden, Polyestern, Polycarbonaten, Copolymeren enthaltend Polyamid, Polyester und/oder Polycarbonat und Mischungen aus diesen Homopolymeren und/oder Copolymeren.

11. Verfahren nach einem der Ansprüche 1 bis 10, **dadurch gekennzeichnet, dass** die mindestens eine weitere Komponente (B) ausgewählt ist aus Nanopartikeln und/oder Polymeren.

12. Verfahren nach Anspruch 11, **dadurch gekennzeichnet, dass** die als (B) eingesetzten Nanopartikel einen D₅₀-Wert von 1 nm bis 500 nm aufweisen.

13. Verfahren nach Anspruch 11 oder 12, **dadurch gekennzeichnet, dass** die als (B) eingesetzten Nanopartikel ausgewählt sind aus Oxiden und Oxidhydraten von Metallen und Halbmetallen.

14. Verfahren nach Anspruch 11, **dadurch gekennzeichnet, dass** das als (B) eingesetzte Polymer ausgewählt ist aus verzweigten und hyperverzweigten Polymeren.

15. Verfahren nach Anspruch 11 oder 14, **dadurch gekennzeichnet, dass** das als (B) eingesetzte Polymer ausgewählt ist aus Polyetheraminen, Polyethyleniminen, Polycarbonaten und Mischungen davon.

16. Verfahren nach einem der Ansprüche 1 bis 15, **dadurch gekennzeichnet, dass** das Dispersionsmedium für (B) ausgewählt ist aus der Gruppe bestehend aus Wasser und Mischungen aus Lösungsmitteln und Wasser mit einer Oberflächenspannung von 35 bis 100 mN/m, gemessen bei 25°C.

17. Verfahren nach einem der Ansprüche 1 bis 16, **dadurch gekennzeichnet, dass** das Verfahren kontinuierlich oder im Batch durchgeführt wird.

## Claims

1. A process for producing polymer mixtures comprising at least one polymer (A) and comprising at least one component (B), comprising the following steps:
(a) providing (A) in the form of granules,
(b) providing (B) in the form of liquid solution and/or dispersion in a dispersion medium,
(c) by means of an atomizer, applying droplets of the solution and/or dispersion provided in step (b) to the granules provided in step (a),
(d) drying the granules obtained in step (c), and
(e) optionally carrying out one or more shaping steps,
wherein the average diameter D₅₀ of the droplets produced by the atomizer in step (c) is from 0.5 to 10 µm.

2. The process according to claim 1, wherein the D₅₀ value of the granules provided in step (a) is from 5 µm to 5 mm, determined via sieving.

3. The process according to either of claims 1 and 2, wherein an ultrasound atomizer is used as atomizer in step (c).

4. The process according to claim 3, wherein the frequency range in which the ultrasound atomizer is operated in step (c) is from 25 kHz to 5 MHz.

5. The process according to any of claims 1 to 4, wherein step (c) is carried out at temperatures of at least 10°C.

6. The process according to any of claims 1 to 5, wherein the granules take the form of fixed bed or fluidized bed in step (c).

7. The process according to any of claims 1 to 6, wherein, in step (d), the granules are dried by passage of an inert gas stream.

8. The process according to any of claims 1 to 7, wherein the at least one polymer (A) has been selected from thermoplastic polymers.

9. The process according to any of claims 1 to 8, wherein the at least one polymer (A) has been selected from polymers which have been produced by means of polycondensation.

10. The process according to any of claims 1 to 9, wherein the at least one polymer (A) has been selected from the group consisting of polyamides, polyesters, polycarbonates, copolymers comprising polyamide, polyester, and/or polycarbonate, and mixtures made of said homopolymers and/or copolymers.

11. The process according to any of claims 1 to 10, wherein the at least one further component (B) has been selected from nanoparticles and/or polymers.

12. The process according to claim 11, wherein the D₅₀ value of the nanoparticles used as (B) is from 1 nm to 500 nm.

13. The process according to claim 11 or 12, wherein the nanoparticles used as (B) have been selected from oxides and oxide hydrates of metals and semi-metals.

14. The process according to claim 11, wherein the polymer used as (B) has been selected from branched and hyperbranched polymers.

15. The process according to claim 11 or 14, wherein the polymer used as (B) has been selected from polyetheramines, polyethyleneimines, polycarbonates, and mixtures thereof.

16. The process according to any of claims 1 to 15, wherein the dispersion medium for (B) has been selected from the group consisting of water and mixtures of solvents and water with surface tension from 35 to 100 mN/m, measured at 25°C.

17. The process according to any of claims 1 to 16, which is carried out continuously or batchwise.

## Revendications

1. Procédé de fabrication de mélanges de polymères contenant au moins un polymère (A) et au moins un composant (B), comprenant les étapes suivantes :
(a) la préparation de (A) sous la forme d'un granulat,
(b) la préparation de (B) sous la forme d'une solution et/ou dispersion liquide dans un milieu de dispersion,
(c) l'application de la solution et/ou dispersion préparée à l'étape (b) sous la forme de gouttelettes sur le granulat préparé à l'étape (a) au moyen d'un pulvérisateur,
(d) le séchage du granulat obtenu à l'étape (c) et
(e) éventuellement la réalisation d'une ou de plusieurs étapes de façonnage,
**caractérisé en ce que** les gouttelettes générées par le pulvérisateur à l'étape c) présentent un diamètre moyen D₅₀ de 0,5 à 10 µm.

2. Procédé selon la revendication 1, **caractérisé en ce que** le granulat préparé à l'étape (a) présente une valeur D₅₀ de 5 µm à 5 mm, déterminée par tamisage.

3. Procédé selon l'une quelconque des revendications 1 ou 2, **caractérisé en ce qu'**un pulvérisateur à ultrasons est utilisé en tant que pulvérisateur à l'étape (c).

4. Procédé selon la revendication 3, **caractérisé en ce que** le pulvérisateur à ultrasons à l'étape (c) est exploité dans la plage de fréquences allant de 25 kHz à 5 MHz.

5. Procédé selon l'une quelconque des revendications 1 à 4, **caractérisé en ce que** l'étape (c) est réalisée à des températures d'au moins 10 °C.

6. Procédé selon l'une quelconque des revendications 1 à 5, **caractérisé en ce que** le granulat à l'étape (c) se présente sous la forme d'un lit fixe ou d'un lit fluidisé.

7. Procédé selon l'une quelconque des revendications 1 à 6, **caractérisé en ce que** le granulat est séché à l'étape (d) par passage d'un courant de gaz inerte.

8. Procédé selon l'une quelconque des revendications 1 à 7, **caractérisé en ce qu'**au moins un polymère (A) est choisi parmi les polymères thermoplastiques.

9. Procédé selon l'une quelconque des revendications 1 à 8, **caractérisé en ce que** le ou les polymères (A) sont choisis parmi les polymères qui peuvent être fabriqués par polycondensation.

10. Procédé selon l'une quelconque des revendications 1 à 9, **caractérisé en ce que** le ou les polymères (A) sont choisis dans le groupe constitué par les polyamides, les polyesters, les polycarbonates, les copolymères contenant un polyamide, un polyester et/ou un polycarbonate, et les mélanges de ces homopolymères et/ou copolymères.

11. Procédé selon l'une quelconque des revendications 1 à 10, **caractérisé en ce que** le ou les composants supplémentaires (B) sont choisis parmi les nanoparticules et/ou les polymères.

12. Procédé selon la revendication 11, **caractérisé en ce que** les nanoparticules utilisées en tant que (B) présentent une valeur D₅₀ de 1 nm à 500 nm.

13. Procédé selon la revendication 11 ou 12, **caractérisé en ce que** les nanoparticules utilisées en tant que (B) sont choisies parmi les oxydes et les oxyhydrates de métaux et de semi-métaux.

14. Procédé selon la revendication 11, **caractérisé en ce que** le polymère utilisé en tant que (B) est choisi parmi les polymères ramifiés et hyper-ramifiés.

15. Procédé selon la revendication 11 ou 14, **caractérisé en ce que** le polymère utilisé en tant que (B) est choisi parmi les polyéther-amines, les polyéthylène-imines, les polycarbonates et leurs mélanges.

16. Procédé selon l'une quelconque des revendications 1 à 15, **caractérisé en ce que** le milieu de dispersion pour (B) est choisi dans le groupe constitué par l'eau et les mélanges de solvants et d'eau ayant une tension superficielle de 35 à 100 mN/m, mesurée à 25 °C.

17. Procédé selon l'une quelconque des revendications 1 à 16, **caractérisé en ce que** le procédé est réalisé de manière continue ou discontinue.
